# EUROPÄISCHE PATENTANMELDUNG

(11) **EP 4 644 332 A1**
(43) Veröffentlichungstag der Anmeldung: **05.11.2025**
(21) Anmeldenummer: 24221643.0
(22) Anmeldetag: 19.12.2024
(51) Int. Cl.: C02F 1/28, B01J 20/24, C02F 1/32, C02F 1/52, C02F 101/30, C02F 103/00, C02F 103/08, C02F 1/68

(54) **AGGLOMERATIONSMITTEL ZUM BINDEN VON MIKROPLASTIKPARTIKELN UND/ODER SCHADSTOFFEN IM WASSER, VERFAHREN ZUR HERSTELLUNG EINES AGGLOMERATIONSMITTELS, WASSERAUFBEREITUNGSVORRICHTUNG UND WASSERAUFBEREITUNGSVERFAHREN**

(30) Priorität: 03.05.2024 DE 102024112502
(71) Anmelder: Zahnen Technik GmbH, 54687 Arzfeld (DE)
(72) Erfinder: Zahnen, Herbert, 54687 Arzfeld (DE); Ney, Benedikt, 54687 Arzfeld (DE); Poppelreiter, Nils, 54570 Mürlenbach (DE); Kulik, Michaela, 54597 Lünebach (DE); Hennigs, Jan, 54675 Mettendorf (DE)
(74) Vertreter: Weidner Stern Jeschke

(57) **Zusammenfassung**

Die Erfindung betrifft ein Agglomerationsmittel zum Binden von Mikroplastikpartikeln und/oder Schadstoffen im Wasser, wobei das Agglomerationsmittel einen weitgehend wasserunlöslichen Filmbildner zum Bilden eines Films auf einer Wasseroberfläche des Wassers und ein Konservierungsmittel zum Haltbarmachen des Agglomerationsmittel aufweist, wobei das Agglomerationsmittel Monomere, einen Photoinitiator und ein Lösungsmittel zum Lösen des Photoinitiator aufweist, wobei die Monomere ein acryliertes und/oder epoxidiertes pflanzliches Öl aufweisen, sodass durch eine Photoaktivierung des Photoinitiators eine Polymerisation der Monomere und eine Bildung von Agglomeraten zum Binden von Mikroplastikpartikeln und/oder Schadstoffen im Wasser erzeugbar sind. Des Weiteren betrifft die Erfindung ein Verfahren zur Herstellung eines Agglomerationsmittels, eine Wasseraufbereitungsvorrichtung und ein Wasseraufbereitungsverfahren.

## Beschreibung

Die Erfindung betrifft ein Agglomerationsmittel zum Binden von Mikroplastikpartikeln und/oder Schadstoffen im Wasser, wobei das Agglomerationsmittel einen weitgehend wasserunlöslichen Filmbildner zum Bilden eines Films auf einer Wasseroberfläche des Wassers und ein Konservierungsmittel zum Haltbarmachen des Agglomerationsmittels aufweist. Des Weiteren betrifft die Erfindung ein Verfahren zur Herstellung eines Agglomerationsmittels, eine Wasseraufbereitungsvorrichtung zum Entfernen von Mikroplastikpartikeln und/oder Schadstoffen und ein Wasseraufbereitungsverfahren zum Binden von Mikroplastikpartikeln und/oder Schadstoffen im Wasser.

Mikroplastikpartikel kommen ubiquitär in allen Bereichen der Umwelt vor. Dementsprechend sind diese im Süß- und Salzwasser sowie in verschiedenen Abwasserarten, wie kommunalen und industriellen Abwasser, zu finden. Mikroplastikpartikel werden sowohl gezielt produziert und in unterschiedlichsten Produkten, wie beispielsweise Kosmetika, verwendet als auch entstehen diese durch Zerfall von Kunststoffprodukten und/oder Plastikmüll. In kommunalen Kläranlagen werden Mikroplastikpartikel zum Großteil mittels direkter Sedimentation und/oder Inkorporation in Schlammflocken über den Klärschlamm aus dem Abwasser entfernt. Dennoch verbleiben üblicherweise einige Hunderte bis Tausende Mikroplastikpartikel pro Liter im Kläranlagenablauf. Zwar ist eine mechanische Abtrennung durch Filtration prinzipiell möglich, aufgrund der geringen Partikelgröße von Mikroplastikpartikeln ist hierzu jedoch eine großvolumige Tiefenfiltration oder eine Mikrofiltration mittels Membranen mit geringer Porengröße notwendig. Neben hohen Kosten besteht der Nachteil, dass derart mechanisch abgetrennte Mikropartikel aus Abwasser zusammen mit weiteren Feststoffen vermischt sind und/oder mit dem abgetrennten Klärschlamm gemeinsam entsorgt werden.

Allgemein sind in der Wasseraufbereitung Flockungsmittel, wie dreiwertige Metallsalze von Eisen oder Aluminium und Hydroxydbildner, beispielsweise Kalkmilch, sowie organische Flockungsmittel, bekannt. Flockungsmittel dienen vor allem der Trübstoffentfernung, indem diese mit Kolloiden im Wasser größere Mikroflocken und bei zusätzlicher Zugabe von Flockungshilfsmitteln Makroflocken bilden, welche mittels Filtration, Sedimentation oder Flotation entfernt werden können. Nachteilig hierbei ist, dass ebenfalls stets ein Gemisch von abgetrennten kolloiden Partikeln und Mikroplastikpartikeln und somit ein großes Abfallstoffvolumen enthaltend Mikroplastikpartikeln vorliegt.

Des Weiteren wird Hybridkieselsäurematerial zur Entfernung von anthropogenen Verunreinigungen, insbesondere Mikroplastikpartikeln in der DE 10 2015 207 061 A1 und DE 10 2015 211 052 A1 vorgeschlagen, wobei die Plastikpartikel in Röhrenstrukturen einer Struktureinheit des Hybridkieselsäurematerials eingefangen werden. Nachteilig hierbei ist, dass aufgrund der Röhrenstrukturen mit einem Innendurchmesser von 10 nm bis 100 µm die darin eingefangenen Mikroplastikpartikel anschließend nur schwer vom Hybridkieselsäurematerial wieder getrennt werden können.

In der DE 10 2018 003 805 A1 wird eine Aktivkohlezusammensetzung enthaltend Aktivkohle und Alkyltrichlorsilan und/oder Silsesquioxan zur Modifizierung der Aktivkohle beschrieben, wobei über eine Alkylgruppe des Alkyltrichlorsilans und/oder Silsesquioxans eine Agglomeration von Mikroplastikpartikeln im Wasser stattfindet. Die DE 10 2018 203 185 A1 betrifft die Ausbildung einer Einschluss- und/oder Inkalationsverbindung aus einem Hybridkieselgel und Mikroplastikpartikeln, wobei das Hybridkieselgel durch Umsetzung eines Alkyltrichlorsilans und/oder Silsesquioxans mit einer Käfigstruktur in Wasser gebildet ist und das Hybridkieselgel die Mikroplastikpartikel zumindest teilweise einschließt oder umgibt. Nachteilig neben der gebildeten Einschlussverbindungen ist, dass trotz der Hydrolyse und Reaktion von Alkyltrichlorsilan im Wasser eine ökotoxikologische Bedenklichkeit der eingesetzten Stoffe nicht vollständig ausgeräumt ist.

DE 10 2018 220 963 A1 betrifft eine Verwendung einer Acylglycerolverbindung zur Entfernung von Aktivkohle, insbesondere mit Spurenstoffen, wie Pestiziden oder Mikroplastikpartikeln beladener Aktivkohle, aus Wasser, um einen ungewünschten Austrag der Aktivkohle und/oder Schadstoffe trotz mechanischer Abscheidung zu vermeiden. Bevorzugt handelt es sich bei der Acylglycerolverbindung um Glyceryltributyrat, welches unmittelbar nach Zugabe einen Film auf der Oberfläche des Wassers bildet, Aktivkohlepartikel darin sammelt und von der Oberfläche entfernt werden kann.

Aus der DE 10 2020 004 662 B4 ist ein Wasseraufbereitungsverfahren und eine Wasseraufbereitungsanlage zur Entfernung von Schadstoffen, wie Mikroplastik, aus Wasser bekannt, bei welchem dem aufzubereitenden Wasser anorganisch-organisches Hybridkieselsäurematerial in einen Rotationsbehälter zudosiert wird, wobei in einem oberen Behälterbereich in einer Trombe aufkonzentrierte Agglomerate in eine Entnahmeeinrichtung überlaufen und die Entnahmeeinrichtung eine Bewegungsumformung aus der Trombenzirkulation in eine Spaltaufströmung bewirkt, um in die Entnahmeeinrichtung übergelaufene Agglomerate in zumindest einer Rinne mit zur Seitenwand des Rotationsbehälters hin abfallend ausgebildeten Rinnenboden abzuleiten.

Die DE 195 27 472 C1 beschreibt eine Vorrichtung zur UV-Intensitätssteigerung bei der Behandlung von viskosen Flüssigkeiten, bei welcher eine Bestrahlungseinheit mit mindestens einem UV-Strahler und einem Reflektor oberhalb eines Flüssigkeitsfreispiegels eines Flüssigkeitsbehälters angeordnet ist und UV-C-Strahlung emittiert.

Aufgabe der Erfindung ist es, den Stand der Technik zu verbessern.

Gelöst wird die Aufgabe durch ein Agglomerationsmittel zum Binden von Mikroplastikpartikeln und/oder Schadstoffen im Wasser, wobei das Agglomerationsmittel einen weitgehend wasserunlöslichen Filmbildner zum Bilden eines Films auf einer Wasseroberfläche des Wassers und ein Konservierungsmittel zum Haltbarmachen des Agglomerationsmittels aufweist, wobei das Agglomerationsmittel Monomere, einen Photoinitiator und ein organisches Lösungsmittel zum Lösen des Photoinitiators aufweist, wobei die Monomere ein acryliertes und/oder epoxidiertes pflanzliches Öl aufweisen, sodass durch eine Photoaktivierung des Photoinitiators eine Polymerisation der Monomere und eine Bildung von Agglomeraten zum Binden von Mikroplastikpartikeln und/oder Schadstoffen im Wasser erzeugbar sind.

Somit ist ein Agglomerationsmittel bereitgestellt, mittels dem gezielt Mikroplastik und/oder andere Schadstoffe aus dem Wasser entfernbar sind. Es ist besonders vorteilhaft, dass das Agglomerationsmittel erst vor Ort und/oder direkt bei der Anwendung mittels Photoaktivierung des Photoinitiators und durch die dadurch induzierte Polymerisation der Monomere in einen gebrauchsfertigen Zustand überführt wird, in welchem ein Binden von Mikroplastikpartikeln und/oder Schadstoffen im Wasser erfolgt.

Da das Agglomerationsmittel an sich relativ dickflüssig ist und eine Dichte geringer als Wasser aufweist, liegt es bei der Anwendung auf der Wasseroberfläche vor. Mikroplastikpartikel und weitere Schadstoffe bleiben an dem Agglomerationsmittel haften und bilden Agglomerate aus. Das Agglomerationsmittel mit den entstandenen Agglomeraten wird mittels einer Lichtquelle beleuchtet, wodurch eine Photoaktivierung des Photoinitiators unter Photolyse Reaktion und Bildung von radikalischen Verbindungen erfolgt, welche wiederum Polymerisationsreaktionen der Monomere indizieren. Dadurch entsteht ein Biopolymer aus dem Agglomerationsmittel, welches die Mikroplastikpartikel und/oder weitere Schadstoffe fest bindet und sich von der Wasseroberfläche entfernen lässt.

Weiterhin ist vorteilhaft, dass mit acrylierten und/oder epoxidierten pflanzlichen Öl eine Modifikation von natürlichen Stoffen als Monomere im Agglomerationsmittel enthalten sind. Diese werden gezielt, technisch zur Polymerisation als Monomere eingesetzt und genutzt und stellen bei der Anwendung eine Öl-Phase getrennt vom Wasser für die Anreicherung von Mikroplastikpartikeln und von lipophilen Schadstoffen dar.

Ein wesentlicher Gedanke der Erfindung beruht darauf, ein Agglomerationsmittel gezielt mit den Komponenten von Monomeren, einem Photoinitiator, einem Lösungsmittel, einem Filmbildner und einem Konservierungsmittel zusammenzustellen, welches im und/oder auf dem Wasser anwendbar ist und in dem der Photoinitiator mittels des Lösungsmittels gelöst und gleichmäßig verteilt ist, um bei Anwendung und/oder Bedarf durch Photoaktivierung des Photoinitiators die gewünschte Polymerisation der Monomere, der Bildung von Agglomeraten und dem zumindest teilweisen Aushärten als Biopolymer zu gewährleisten. Es ist besonders vorteilhaft, dass das Agglomerationsmittel erst durch die Photoaktivierung direkt am Ort des Einsatzes chemisch durch photolytische und/oder radikalische Reaktionen umgewandelt wird und die zumindest teilweise bereits an dem Agglomerationsmittel anhaftenden Mikroplastikpartikel und/oder weiteren Schadstoffe aufgrund der Polymerisation der Monomere chemisch gebunden und/oder zumindest in der Polymermatrix eingeschlossen werden. Hierbei findet neben der eigentlichen Polymerisation insbesondere zumindest auch teilweise ein Aushärten des gebildeten Biopolymers statt, sodass die Mikroplastikpartikel und/oder Schadstoffe weitgehend unlösbar und/oder untrennbar in dem chemisch umgewandelten Agglomerationsmittel gezielt gebunden und/oder eingebunden sind. Vorteilhaft findet das Binden der Mikroplastikpartikel und/oder Schadstoffe aufgrund der Eigenschaften und der Ausbildung einer Schicht des Agglomerationsmittels auf der Wasseroberfläche spezifisch statt, so dass im Wasser vorkommende andere Feststoffe, wenn überhaupt, nur teilweise mit eingebunden werden, sodass der Anfall an Abfallstoffen minimiert wird.

### Folgendes Begriffliche sei erläutert:

Ein "Agglomerationsmittel" ist insbesondere ein Mittel, welches eine Vergrößerung eines Partikels und/oder ein Anhäufen und/oder Zusammenschließen von Teilchen zu größeren Teilchen bewirkt. Bei den Partikeln und/oder Teilchen muss es sich nicht zwingend um feste Partikel handeln. Ebenso können dispergierte, suspendierte, emulgierte und/oder auch gelöste Teilchen und/oder Stoffe mittels des Agglomerationsmittels zu größeren Partikeln und/oder Teilchen verbunden werden. Ein mittels des Agglomerationsmittel induziertes Agglomerieren von Mikroplastikpartikeln und/oder anderen Schadstoffen erfolgt insbesondere aufgrund der photoaktivierten Polymerisation der Monomere des Agglomerationsmittels. Somit findet die Agglomeration gerade nicht durch Reaktion einer Komponente des Agglomerationsmittels mit dem Wasser statt und auch nicht durch Aufhebung der Abstoßungskräfte von im Wasser verteilten Partikeln mittels einer entgegengesetzten elektrischen Ladung wie bei bekannten konventionellen Flockungsmitteln. Das Agglomerationsmittel kann in unterschiedlichen Zusammensetzungsbereichen Monomere, einen Photoinitiator, ein Lösungsmittel, einen Filmbildner und ein Konservierungsmittel aufweisen. Beispielsweise kann das Agglomerationsmittel eine Zusammensetzung von 150 ml Aceton als Lösungsmittel, 4,5 g Benzoin als Photoinitiator, 1,5 g Ethylcellulose als Filmbildner, 0,75 g Ascorbinsäure als Konservierungsmittel und 100 g Sojabohnenöl als epoxidiertes Acrylat aufweisen. Bevorzugt kann aber auch eine höhere Masse von 4 g Ethylcellulose auf 100 g Sojabohnenöl als epoxidiertes Acrylat eingesetzt werden. Bevorzugt sind alle Komponenten des Agglomerationsmittel natürlichen Ursprungs und/oder kommen natürlicherweise auch in der Umwelt vor. Somit wird unter Biopolymer verstanden, das dieses durch Polymerisation von natürlichen und/oder zumindest weitgehend natürlich vorkommenden und/oder modifizierten Stoffen gebildet wird. Vor dem Einsatz und/oder der Photoaktivierung liegt das Agglomerationsmittel insbesondere in einem flüssigen bis dickflüssigen Zustand vor. In diesem Zustand weist das Agglomerationsmittel insbesondere eine geringere Dichte als Wasser auf. Nach der Photoaktivierung und Polymerisation liegt das reagierte Agglomerationsmittel und/oder die gebildeten Agglomeraten insbesondere als feste Stoffe und/oder Partikel vor.

Bei den "Monomeren" handelt es sich insbesondere um reaktionsfähige Moleküle, welche aufgrund einer Photoaktivierung sich zu Polymeren zusammenschließen können. Bei den Monomeren kann es sich insbesondere um Einzelsubstanzen oder auch um Gemische unterschiedlicher Verbindungen handeln. Die Monomere sind insbesondere natürlichem Ursprungs und somit ein natürliches Gemisch unterschiedlicher Verbindungen und Bestandteile. Die Monomere weisen insbesondere ein pflanzliches Öl auf. Bei den Monomeren handelt es sich insbesondere um ein acryliertes und/oder epoxidiertes Sojabohnenöl und/oder Leinöl (auch Leinsamenöl genannt). Bei den Monomeren kann es sich jedoch auch um jedes andere pflanzliche Öl, insbesondere trocknendes, halbtrocknendes und/oder härtendes Pflanzenöl, handeln. Beispielsweise kann es sich bei den Monomeren auch um Rapsöl und/oder Distelöl handeln. Die Monomere sind insbesondere mittels eines Stabilisators stabilisiert, um ein sofortiges und/oder verfrühtes Aushärten vor der Anwendung des Agglomerationsmittel zu verhindern. Als Stabilisator wird beispielsweise Hydrochinonmonomethylether eingesetzt. Somit können die Monomere ein stabilisiertes, acryliertes und/oder epoxidiertes Sojabohnenöl sein.

Unter "pflanzliches Öl" (auch "Pflanzenöl" genannt) wird ein insbesondere aus verschiedenen Teilen von Ölpflanzen gewonnenes fettes Öl verstanden. Ein Pflanzenöl ist insbesondere ein Ester des Glycerins mit Fettsäuren (auch Triglyceride genannt). Pflanzliches Öl weist insbesondere gemischte Triglyceride, Diglyceride und/oder Monoglyceride auf. Pflanzenöl ist bei Raumtemperatur insbesondere flüssig oder dickflüssig. Als Fettsäure weist pflanzliches Öl beispielsweise Ölsäure, Linolsäure und/oder Linolensäure auf. Die Dichte von Pflanzenöl ist insbesondere geringer als die Dichte von Wasser.

Bei der Polymerisation der Monomere wird insbesondere gerade nicht das bei Pflanzenölen natürlicherweise auftretende, bekannte Vernetzen der ungesättigten Fettsäuren aufgrund einer Oxidation durch Luftsauerstoff und folglich ein Verdicken und/oder Verharzen des Pflanzenöls angewendet. Stattdessen wird gezielt, technisch insbesondere bei den acrylierten und/oder epoxidierten Pflanzenölen ein radikalischer Aufbruch der Acrylgruppen und/oder Epoxygruppen mit anschließender Vernetzung und/oder Polymerisation genutzt. Die Acrylgruppen und/oder Epoxygruppen sind aufgrund des jeweils enthaltenen Sauerstoffatoms hochreaktiv und reagieren insbesondere in radikalischen Reaktionen. Unter "acryliert" wird insbesondere verstanden, dass eine Acrylgruppe in ein Molekül des pflanzlichen Öls eingeführt ist. Dementsprechend wird unter "epoxidiert" verstanden, dass eine Epoxy- und/oder Epoxidgruppe in ein Molekül des Pflanzenöls eingeführt ist.

Ein "Lösungsmittel" ist insbesondere ein Stoff, welcher den Photoinitiator löst. Das Lösungsmittel ist insbesondere ein organisches Lösungsmittel. Das Lösungsmittel ist insbesondere eine Flüssigkeit, in welcher der Photoinitiator sich löst und verteilt. Bei dem Lösungsmittel handelt es sich insbesondere um einen Stoff oder um ein Stoffgemisch. Das Lösungsmittel kann neben dem Lösen des Photoinitiators insbesondere auch zum Lösen von den weiteren Komponenten des Agglomerationsmittels dienen. Das Lösungsmittel kann insbesondere Aceton, Ethylacetat, Diethylether, Ethanol, Isopropanol und/oder ähnliche ein- und zweiwertige Alkohole aufweisen. Im Falle eines bestimmten Photoinitiators kann zu seiner Lösung ein Mindestgewichtsanteil an Lösungsmittel erforderlich sein. Beispielsweise weist bei Benzoin das Lösungsmittel insbesondere mindestens 15 Gewichtsprozent Aceton auf.

Unter "Filmbildner" wird insbesondere ein Stoff verstanden, welcher das Zusammenkommen eines möglichst zusammenhängenden Films des Agglomerationsmittels auf der Wasseroberfläche bewirkt. Dazu ist der Filmbildner insbesondere vollständig oder zumindest weitgehend wasserunlöslich, weist jedoch eine gewisse Löslichkeit in dem Lösemittel auf. Bei dem Filmbildner kann es sich um einen Stoff oder ein Stoffgemisch handeln. Der Filmbildner bildet insbesondere an und/oder auf der Wasseroberfläche einen Film, um dort die Komponenten des Agglomerationsmittels zu fixieren und/oder die Mikroplastikpartikel und/oder weiteren Schadstoffe zu sammeln. Bevorzugt weist der Filmbildner eine zumindest ähnliche Dichte wie die Mikroplastikpartikel und/oder Schadstoffe auf. Bei einem Filmbildner kann es sich um jegliche Art eines Cellulosederivates handeln. Bei dem Filmbildner handelt es sich beispielsweise um Ethylcellulose und/oder Nitrocellulose.

Ein "Konservierungsmittel" dient insbesondere zum Haltbarmachen des Agglomerationsmittels vor seiner Verwendung und/oder vor der gezielten Photoaktivierung. Das Konservierungsmittel verhindert insbesondere, dass das Agglomerationsmittel bereits ohne gezielte Photoaktivierung aufgrund von natürlicher Lichteinstrahlung und/oder anderen Umweltbedingungen unerwünscht frühzeitig aushärtet und/oder polymerisiert. Zudem kann das Konservierungsmittel auch ein Wachstum von Mikroorganismen hemmen. Bei dem Konservierungsmittel kann es sich um einen Stoff oder ein Stoffgemisch handeln. Das Konservierungsmittel kann als jegliche Art von chemischem Stabilisator ausgebildet sein. Bei dem Konservierungsmittel handelt es sich beispielsweise um Ascorbinsäure, Zitronensäure, Ameisensäure, Calciumsorbat, Kaliumsorbat und/oder ähnliche Stoffe. Im Agglomerationsmittel weist das Konservierungsmittel, beispielsweise Ascorbinsäure, insbesondere mindestens 0,10 Gewichtsprozent, bevorzugt mindestens 0,40 Gewichtsprozent, auf.

Ein "Photoinitiator" ist insbesondere eine chemische Verbindung, welche nach Absorption von Licht in einer Photoreaktion reagiert und/oder zerfällt und reaktive Gruppen und/oder Spezies bildet, welche eine weitere Reaktion, insbesondere eine Polymerisation, initiieren können. Bei den gebildeten reaktiven Gruppen und/oder Spezies handelt es sich insbesondere um Radikale und/oder um Kationen. Bei einem Photoinitiator kann es sich um einen Stoff oder ein Stoffgemisch handeln. Der Photoinitiator bewirkt insbesondere eine radikalische Polymerisation. Bei einem Photoinitiator kann es sich beispielsweise um Benzoin, Benzophenon, 2-Thioxanthon-Thioessigsäure oder einen ähnlichen Stoff handeln. Bei einem Photoinitiator handelt es sich bevorzugt um einen Stoff mit einer natürlichen Herkunft und/oder einer hohen Umweltverträglichkeit. Ein Photoinitiator ist insbesondere nicht ein Photoinitiator, wie dieser für strahlungshärtende Lacke und/oder Harz-Formulierungen eingesetzt wird, da die für diese Anwendungen bekannten Photoinitiatoren akut toxisch und nicht im Wasser einsetzbar sind. Der Photoinitiator wird insbesondere mittels Photoaktivierung durch Bestrahlung mit UV-Licht in einem Bereich von 100 nm bis 400 nm aktiviert. Im Falle, dass der Photoinitiator Benzoin aufweist, erfolgt die Photoaktivierung insbesondere mit UVC-Strahlung in einem Wellenlängenbereich von 250 nm bis 300 nm. Beim Zersetzen des Photoinitiators und/oder der Bildung von Radikalen können prinzipiell die verschiedensten radikalischen Reaktionen ablaufen. Beispielsweise kann dies unter H-Abstraktion und/oder Peroxidformation erfolgen. Bevorzugt lösen die unter der Photoreaktion gebildeten Radikale aus dem Photoinitiator direkt die Polymerisation der Monomere aus.

Unter "Wasser" wird insbesondere jegliche Art von Wasser in einem flüssigen Aggregatzustand verstanden. Bei Wasser kann es sich insbesondere um Meerwasser, Süßwasser, Oberflächenwasser, Trinkwasser, Abwasser, Spülwasser, Waschwasser, Brauchwasser und/oder industrielles Prozesswasser handeln. Das Wasser weist insbesondere Mikroplastikpartikel und/oder weitere Schadstoffe auf.

Bei "Schadstoffen" handelt es sich insbesondere um organische Verbindungen, welche ein Gefährdungspotenzial für Menschen, Tiere, Pflanzen und/oder die Umwelt aufweisen und biologisch nur sehr langsam abbaubar und/oder umwandelbar sind. Schadstoffe können sich insbesondere in Organismen anreichern und dort schädliche Effekte bewirken oder über weite Strecken in der Umwelt verteilt werden. Unter organischen Schadstoffen werden auch persistente organische Schadstoff (POP) verstanden. Beispielsweise handelt es sich bei den organischen Schadstoffen um Chemikalien, Pestizidrückstände, Pflanzenschutzmittel und/oder Medikamentenrückstände. Unter Schadstoffen werden auch die Umwandlungsprodukte und/oder Metaboliten der primär anfallenden organischen Schadstoffe verstanden. Die Schadstoffe sind insbesondere zumindest teilweise wasserunlöslich und/oder in dem Lösungsmittel und/oder dem acrylierten und/oder epoxidierten pflanzlichen Öl des Agglomerationsmittels löslich. Die organischen Schadstoffe weisen insbesondere eine geringere Dichte als Wasser auf. Bei Schadstoffen kann es sich jedoch auch um weitere Feststoffe und/oder Kolloide handeln, welche mittels des Agglomerationsmittels agglomeriert werden.

Unter "Mikroplastikpartikeln" werden insbesondere kleine Kunststoffteilchen mit einem Durchmesser von jeweils kleiner 5 mm verstanden. Kunststoffpartikel in einem Größenbereich von 1 nm bis 1.000 nm werden insbesondere auch als Nanoplastik bezeichnet und gehören als Nanopartikel zu den Mikroplastikpartikeln. Mikroplastikpartikel werden insbesondere gezielt produziert und beispielsweise in Kosmetika verwendet oder entstehen durch den Zerfall und den Abbau von Kunststoffprodukten, beispielsweise aus Plastikmüll. Mikroplastikpartikel sind insbesondere schwer biologisch und/oder physikalisch abbaubar und weisen eine ähnliche und/oder geringere Dichte als Wasser auf. Mikroplastikpartikel kommen weltweit in allen Bereichen der Umwelt vor. Die Mikroplastikpartikel können insbesondere weitere Schadstoffe und/oder Giftstoffe, wie Weichmacher, aufweisen oder andere vorkommende organische Stoffe lagern sich aufgrund ihrer Eigenschaften an der Oberfläche von Mikroplastikpartikeln an, wie beispielsweise Kohlenwasserstoffe oder Flammschutzmittel.

In einer weiteren Ausführungsform weist das Agglomerationsmittel die Monomere in einem Bereich von 35,00 bis 60,00 Gewichtsprozent, das organische Lösungsmittel in einem Bereich von 15,00 bis 69,00 Gewichtsprozent, den Photoinitiator in einem Bereich von 0,50 bis 5,00 Gewichtsprozent, den Filmbildner in einem Bereich von 0,50 bis 2,00 Gewichtsprozent und/oder das Konservierungsmittel in einem Bereich von 0,10 bis 1,00 Gewichtsprozent auf, wobei die Monomere, das Lösungsmittel, der Photoinitiator, der Filmbildner und das Konservierungsmittel sich jeweils zu 100 Gewichtsprozent ergänzen.

Um ein häufig angebautes sowie gut polymerisierendes Öl einzusetzen, ist das acrylierte und/oder epoxidierte pflanzliche Öl Sojabohnenöl und/oder Leinöl.

"Sojabohnenöl" (auch "Sojaöl" genannt) ist insbesondere ein Öl, welches durch Extraktion und/oder Pressen aus Sojabohnen gewonnen ist. Sojabohnenöl weist insbesondere eine Dichte in einem Bereich von 0,917 bis 0,921 g/cm³ bei 25 °C und eine Viskosität von 65 mm²/s bei 20 °C auf und ist somit relativ dickflüssig. Sojabohnenöl ist insbesondere ein schnelltrocknendes Öl.

"Leinöl" (auch "Leinsamenöl" genannt) ist insbesondere ein pflanzliches Öl, welches aus Leinsamen gewonnen ist. Leinöl ist insbesondere ein aushärtendes Öl. Leinöl weist insbesondere eine Dichte von 0,931 g/cm³ bei 25 °C und eine Viskosität von 51,2 mm²/s bei 20 °C auf.

In einer weiteren Ausführungsform des Agglomerationsmittels weist der Photoinitiator eine Ketonverbindung, insbesondere Benzoin, Benzophenon und/oder 2-Thioxanthon-Thioessigsäure, auf.

Es ist besonders vorteilhaft, dass es sich bei dem Photoinitiator um eine natürlich vorkommende Verbindung, wie beispielsweise Benzoin und/oder Benzophenon handelt, sodass diese problemlos zur Wasserbehandlung einsetzbar und nicht human- und/oder ökotoxisch ist.

"Benzoin" ist insbesondere eine einfaches aromatisches Hydroxylketon. Benzoin kommt natürlicherweise in einigen Pflanzen vor. Somit weist Benzoin eine sehr gute Umweltverträglichkeit auf und lässt sich problemlos im Wasser anwenden. Benzoin ist als Aromastoff für Lebensmittel in der EU zugelassen. Benzoin liegt unter normalen Umweltbedingungen als Feststoff vor. Benzoin ist mit einer Löslichkeit von 0,3 g/l bei 25 °C schlecht in Wasser löslich, dagegen jedoch gut in Aceton und anderen Lösungsmittel, beispielsweise Ethanol, löslich. Zum Lösen von Benzoin als Photoinitiator sind mindestens 15 Gewichtsprozent an Aceton in dem Agglomerationsmittel notwendig, um eine ausreichende Lösung und homogene Verteilung von Benzoin zu erreichen.

"Benzophenon" (auch als "Diphenylmethanon" bezeichnet) ist eine organische, aromatische Ketonverbindung. Benzophenon kommt natürlicherweise als Geruchsstoff in Trauben vor. Benzophenon liegt unter normalen Umweltbedingungen als fester Stoff vor. Benzophenon weist eine geringe Löslichkeit mit 23 mg/l bei 25 °C in Wasser auf. Benzophenon ist insbesondere in Diethylether und Ethanol löslich.

"2-Thioxanton-Thioessigsäure" ist insbesondere ein natürlicher Photoinitiator und wird mit der Formel C₁₃H₈OSCH₂COOH beschrieben. Thioxanthon ist insbesondere eine heterozyklische Verbindung, welche ein Schwefelanalogon von Xanthon ist. Alternative oder ergänzend zu 2-Thioxanton-Thioessigsäure, kann auch ein anderer Photoinitiator auf Basis von Thioxanthon, beispielsweise 2,4-Diethyl-9H-thioxanthen-9-on (C₁₇H₁₆OS) und/oder 2-Isopropylthioxanthon (C₁₆H₁₄OS), eingesetzt sein oder werden.

Um die Löslichkeit des jeweiligen Photoinitiators und/oder anderer Komponenten des Agglomerationsmittels in dem Lösungsmittel weiter zu verbessern, kann das organische Lösungsmittel Aceton, Ethylacetat, Diethylether und/oder einen einwertigen, primären oder sekundären Alkohol aufweisen.

Somit kann je nach Löslichkeit des verwendeten Photoinitiator ein Lösungsmittel oder ein Gemisch aus zwei oder mehreren Lösungsmitteln verwendet werden. Neben der Verbesserung der Lösung des Photoinitiators, kann das Lösungsmittel oder Gemisch aus Lösungsmitteln gewählt sein, um die Löslichkeitseigenschaften des Agglomerationsmittels optimaler an die Zusammensetzung des zu behandelnden Wassers und/oder Abwassers anzupassen und/oder gezielt hydrophobe, organische Schadstoffe zu binden.

Unter "Alkohol" wird insbesondere eine organische chemische Verbindung verstanden, die eine oder mehrere Hydroxylgruppen gebunden an aliphatischen Kohlenwasserstoffen aufweisen. Ein einwertiger Alkohol liegt vor, wenn dieser eine OH-Gruppe aufweist. Bei einem primären Alkohol weist insbesondere das C-Atom, welches die OH-Gruppe trägt, eine Bindung zu einem weiteren C-Atom auf. Dementsprechend weist bei einem sekundären Alkohol das die OH-Gruppe tragende C-Atom zwei Bindungen zu weiteren C-Atomen auf. Bei einem einwertigen, primären Alkohol handelt es sich beispielsweise um Methanol, Ethanol und Propanol. Bei einem einwertigen, sekundären Alkohol handelt es sich beispielsweise um Isopropanol (auch Propan-2-ol genannt).

"Ethylacetat" (auch "Essigsäureethylester" genannt) ist eine chemische Verbindung aus der Gruppe der Carbonsäureester, welche aus Essigsäure und Ethanol gebildet ist. Ethylacetat kommt natürlicherweise vor, beispielsweise in Früchten, und entsteht bei einer Fermentation. Ethylacetat weist eine Dichte von 0,894 g/cm³ bei 25 °C auf.

"Diethylether" ist eine organische Verbindung aus der Verbindungsklasse der Ether. Diethylether ist eine leicht flüchtige Flüssigkeit und weist eine Dichte von 0,71 g/cm³ bei 20 °C auf. Diethylether ist schlecht in Wasser löslich mit einer Löslichkeit von 69 g/l bei 20 °C. Diethylether ist jedoch gut mit Ethanol, Aceton, Methanol und anderen Lösungsmitteln mischbar.

In einer weiteren Ausführungsform des Agglomerationsmittels weist der Filmbildner ein Cellulosederivat, insbesondere Ethylcellulose und/oder Nitrocellulose, auf.

Unter einem "Cellulosederivat" wird insbesondere ein chemisches Derivat von Cellulose verstanden. Hierbei ist die Cellulose insbesondere modifiziert, beispielsweise durch Methylierung, Ethylierung und/oder Acetylierung.

"Ethylcellulose" ist insbesondere ein makromolekularer Stoff, welcher halbsynthetisch aus natürlich vorkommender Cellulose gewonnen ist. Bei Ethylcellulose handelt es sich insbesondere um einen Celluloseether. Ethylcellulose ist insbesondere ein hydrophober, pulverförmiger Feststoff und in organischen Lösungsmitteln, beispielsweise Ethanol, quellfähig und/oder löslich. Ethylcellulose kann insbesondere als Filmbildner und wasserabweisende Barriereschicht eingesetzt werden. Ethylcellulose ist auch als Lebensmittelzusatzstoff zugelassen.

"Nitrocellulose" (auch als "Cellulosenitrat" bezeichnet) ist insbesondere ein Ester der Cellulose mit einer Nitrat-Gruppierung. Nitrocellulose ist ein faseriger Feststoff. Nitrocellulose ist insbesondere ein Biopolymer. Nitrocellulose ist insbesondere gelöst in Aceton, Essigsäureethylester und/oder anderen Lösungsmitteln als Bindemittel einsetzbar.

In einem weiteren Aspekt der Erfindung wird die Aufgabe gelöst durch ein Verfahren zur Herstellung eines Agglomerationsmittels zum Binden von Mikroplastikpartikeln und/oder Schadstoffen im Wasser, mit folgenden Schritten:
- Vorlegen eines organischen Lösungsmittels,
- Lösen eines Photoinitiators und eines Konservierungsmittels in dem Lösungsmittel, sodass ein Lösungsmittelgemisch vorliegt,
- Zugeben eines Filmbildners zu dem Lösungsmittelgemisch,
- Warten bis der Filmbildner in dem Lösungsmittelgemisch gelöst ist, und anschließend
- Zugeben von Monomeren, wobei die Monomere ein acryliertes und/oder epoxidiertes pflanzliches Öl aufweisen,
sodass ein einsatzfähiges, zuvor beschriebenes Agglomerationsmittel vorliegt.

Bezüglich des Schrittes des Lösens eines Photoinitiators und eines Konservierungsmittels in dem organischen Lösungsmittel ist herauszustellen, dass der Photoinitiator und das Konservierungsmittel in beliebiger Reihenfolge dem Lösungsmittel zugegeben werden können und somit auch gemeinsam zufügbar sind. Durch die Abfolge der vorgenannten Schritte im Verfahren zur Herstellung des Agglomerationsmittels wird sichergestellt, dass das einsatzfähige Agglomerationsmittel in einer homogenen Mischung hergestellt ist und bis zu seinem Einsatz vor Ort stabil bleibt, ohne vorzeitig unerwünscht auszuhärten.

Die Monomere werden erst als letztes zu dem Lösungsmittelgemisch zugegeben, wenn der Filmbildner, insbesondere das Cellulosederivat, vollständig in dem Lösungsmittelgemisch gequollen und/oder gelöst ist. Das Warten bis der Filmbildner in dem Lösungsmittelgemisch gelöst ist, hängt insbesondere vom Energieeintrag beim Zugeben des Filmbildners und/oder einem Vermischen, beispielsweise durch Rühren, Schütteln und/oder Ultraschallbehandlung, ab. Insbesondere liegt die Wartezeit in einem Bereich von 5 min bis 20 min, bevorzugt von 10 min bis 15 min. Das Zugeben der einzelnen Komponenten kann unter kontinuierlichem oder diskontinuierlichem Vermischen, wie Rühren, erfolgen.

In einem zusätzlichen Aspekt der Erfindung wird die Aufgabe gelöst durch eine Wasseraufbereitungsvorrichtung zum Entfernen von Mikroplastikpartikeln und/oder Schadstoffen im Wasser, wobei die Wasseraufbereitungsvorrichtung einen Aufbereitungsbehälter aufweisend das aufzubereitende Wasser mit einer Wasseroberfläche, eine Dosiereinrichtung zum Dosieren eines zuvor beschriebenen Agglomerationsmittels auf die Wasseroberfläche und optional eine Rühreinrichtung zum Rühren des Wassers aufweist, wobei die Wasseraufbereitungsvorrichtung eine UV-Strahlungsquelle derart aufweist, dass durch eine Photoaktivierung des Photoinitiators eine Polymerisation der Monomere des Agglomerationsmittels und eine Bildung von Agglomeraten erzeugbar sind, sodass Mikroplastikpartikel und/oder Schadstoffe in und/oder an den gebildeten Agglomeraten bindbar sind.

Somit wird eine Wasseraufbereitungsvorrichtung bereitgestellt, mit welcher gezielt Mikroplastikpartikel und/oder andere Schadstoffe mittels des Agglomerationsmittels auf und/oder an der Wasseroberfläche des zu behandelnden Wassers angereichert und gebunden werden. Es ist besonders vorteilhaft, dass das auf der Wasseroberfläche dosierte und eingesetzte Agglomerationsmittel aufgrund seiner Dichte und/oder dem Filmbildner gerade im Wesentlichen auf der Wasseroberfläche angeordnet ist und somit dort, wo insbesondere Mikroplastikpartikel und/oder organische Schadstoffe aufgrund ihrer geringeren Dichte als Wasser sich befinden, sodass eine optimale und/oder selektive Entfernung der Mikroplastikpartikel und/oder organischen Schadstoffe mittels des Agglomerationsmittels erfolgt. Vor allem ist nach der Dosierung durch die Photoaktivierung des Photoinitiators mittels der UV-Strahlungsquelle das prinzipiell einsatzfähige Agglomerationsmittel gezielt zu einem gewünschten Zeitpunkt in der Wasseraufbereitungsvorrichtung zur Bildung von Agglomeraten aktivierbar. Dadurch kann die Agglomeration gezielt sowohl räumlich als auch zeitlich in dem Aufbereitungsbehälter durchgeführt und gesteuert werden.

Unter einer "Wasseraufbereitungsvorrichtung" (auch "Wasseraufbereitungsanlage" genannt) wird prinzipiell jede Anlage verstanden, welche zur Aufbereitung von Wasser geeignet ist, wobei die Wasseraufbereitungsanlage jedoch mindestens einen Aufbereitungsbehälter oder einen anderen geeigneten Behälter zur Bildung von Agglomeraten mittels des Agglomerationsmittels aufweist. Optional kann die Wasseraufbereitungsanlage weitere Vorbehandlungs- und/oder Nachbehandlungsschritte und entsprechende Aufbereitungsaggregate aufweisen. Prinzipiell kann es sich bei der Wasseraufbereitungsanlage um eine Trinkwasseraufbereitungsanlage, Abwasseraufbereitungsanlage, Brauchwasseraufbereitungsanlage, Oberflächenwasseraufbereitungsanlage, Prozesswasseraufbereitungsanlage und/oder eine andere Wasseraufbereitungsanlage handeln. Die Wasseraufbereitungsanlage kann beispielsweise eigenständig als letzte Reinigungsstufe im Ablauf einer Kläranlage eingesetzt werden. Ebenso kann die Wasseraufbereitungsanlage dezentral und/oder direkt am Entstehungsort und/oder Anfall mit Mikroplastikpartikeln und/oder Schadstoffen belasteten Wassers, beispielsweise in der Industrie, eingesetzt werden. Die Wasseraufbereitungsanlage kann auch als mobile Anlage, beispielsweise installiert in einem Container, angeordnet und somit transportabel sein. Optional kann die Wasseraufbereitungsvorrichtung auch eine Belüftungseinrichtung aufweisen. Bevorzugt ist die Belüftungseinrichtung am Boden des Aufbereitungsbehälters angeordnet. Mittels der Belüftungseinrichtung, welche insbesondere feine Luftblasen abgibt, wird ein Aufströmen von Mikroplastikpartikeln und/oder Schadstoffen an die Wasseroberfläche unterstützt. Die Belüftungseinrichtung weist insbesondere ein Aggregat zur Lufteinbringung, beispielsweise ein Gebläse oder eine Membranpumpe, auf. Die Wasseraufbereitungsvorrichtung weist insbesondere ein zuvor beschriebenes Agglomerationsmittel auf. Das Agglomerationsmittel ist insbesondere in der Dosiereinrichtung, einem Vorlagebehälter und/oder auf der Oberfläche des zu behandelnden Wassers in einem Agglomerationsbehälter und/oder Aufbereitungsbehälter angeordnet.

Eine "Dosiereinrichtung" ist insbesondere eine Einrichtung, mit welcher ein Agglomerationsmittel auf die Oberfläche des zu behandelnden Wassers aufgebbar ist. Bei einer Dosiereinrichtung kann es sich beispielsweise um eine Sprüheinrichtung und/oder eine Eintropfeinrichtung handeln. Eine Eintropfeinrichtung kann beispielsweise mindestens einen, bevorzugt beweglichen, Tropfschlauch und/oder ein Tropfrohr aufweisen. Bevorzugt findet das Dosieren mittels des Dosiereinrichtung während eines Rührens des Wassers mittels einer Rühreinrichtung statt. Jedoch kann das Dosieren des Agglomerationsmittels auch frei von einem Rühren und/oder einer Wasserbewegung erfolgen. Bevorzugt wird das Agglomerationsmittel tropfenweise mittels der Dosiereinrichtung und/oder Eintropfeinrichtung auf die Wasseroberfläche aufgebracht. Das Aufbringen erfolgt insbesondere dadurch, dass das Agglomerationsmittel von außen nach innen tropfenweise auf die Wasseroberfläche gegeben wird. Dadurch wird insbesondere eine Zugabe des Agglomerationsmittel direkt in eine mittige Trombe bei einem gerührten Agglomerationsbehälter vermieden.

Bei einem "Aufbereitungsbehälter" (auch "Agglomerationsbehälter" genannt) kann es sich um jegliche Art von Behälter handeln. Der Aufbereitungsbehälter kann insbesondere ein Tank, bevorzugt ein oben offener oder ein geschlossener Tank, sein. Der Aufbereitungsbehälter weist insbesondere die Rühreinrichtung zum Rühren des Wassers auf. Bevorzugt ist die Rühreinrichtung am und/oder in der Nähe des Bodens angeordnet. Bei dem Aufbereitungsbehälter kann es sich um einen Rundbehälter mit einem runden, insbesondere kreisrunden, Querschnitt handeln.

Eine "UV-Strahlungsquelle" ist insbesondere eine Energiequelle, welche UV-Strahlung abgibt. Bei einer UV-Strahlungsquelle kann es sich beispielsweise um eine Quecksilberdampflampe (auch UV-Röhre genannt), eine Leuchtdiode (LED), eine Leuchtröhre (auch Kaltkathoden-Fluoreszenzlampe) oder einen Diodenlaser handeln. Die UV-Strahlungsquelle sendet insbesondere UVA-, UVB- und/oder UVC-Strahlung aus. Bevorzugt handelt es sich bei der UV-Strahlungsquelle um eine UVC-Strahlungsquelle, welche UVC-Strahlung einem Wellenbereich von 100 nm bis 280 nm abgibt. Als UVC-Strahlungsquelle kann insbesondere eine QuecksilberLampe zur Abgabe von UVC-Strahlung verwendet werden. Optional kann die UVC-Strahlungsquelle auch eine Ozonbildung induzieren, wodurch die radikalischen Reaktionen und die Polymerisation bei der Photoinitiierung des Agglomerationsmittels verstärkt werden können. Bevorzugt kann die UVC-Strahlungsquelle als Leuchtstoffröhre und/oder Quecksilberlampe derart ausgestaltet sein, dass diese einen hohen Beleuchtungswinkel von bis zu 360° realisiert. Bei der UVC-Strahlungsquelle kann es sich jedoch auch um einen Flächenstrahler handeln, welcher direkt über der Wasseroberfläche installiert ist. Prinzipiell kann es sich bei der UVC-Strahlungsquelle auch um UVC-LEDs handeln, welche beispielsweise auf einem Kühlkörper installiert sind.

In einer weiteren Ausführungsform weist die Wasseraufbereitungsvorrichtung eine Abtrenneinrichtung zum Entfernen von gebildeten Agglomeraten des Agglomerationsmittels mit den gebundenen Mikroplastikpartikeln und/oder Schadstoffen vom Wasser auf.

Um gezielt die sich an der Wasseroberfläche gebildeten und ansammelnden Agglomerate abzuziehen und aus dem Aufbereitungsbehälter zu entfernen, kann die Abtrenneinrichtung eine äußere Gehäusewand aufweisen, an welcher ein Innenrohr mit einem Innenhohlraum angeordnet ist und der Innenhohlraum mit einem Ablaufanschluss verbunden ist, sodass in dem Innenhohlraum sich ansammelnde Agglomerate über den Ablaufanschluss entfernbar sind.

Bei der "Abtrenneinrichtung" handelt es sich insbesondere um jegliche Art von Einrichtung, welche geeignet ist, die sich in und/oder an der Wasseroberfläche ansammelnden Agglomerate und/oder das Agglomerationsmittel abzuziehen und aus dem Aufbereitungsbehälter zu entfernen. Dazu kann die Abtrenneinrichtung insbesondere ein Innenrohr und/oder ein Sammelrohr aufweisen, in dessen Innenhohlraum sich die gebildeten, angesammelten Agglomerate anreichern, welche anschließend gezielt über einen Ablaufanschluss, wie beispielsweise eine Leitung und/oder eine Rinne, abgeführt werden können. Dazu kann beispielsweise zunächst für das Anreichern der sich gebildeten Agglomerate der Ablaufanschluss abgesperrt werden, wodurch der Flüssigkeitsspiegel in dem Innenhohlraum des Innenrohrs ansteigt. Durch die bevorzugte Anordnung des Innenhohlraums in der Mitte des Rührbehälters und/oder aufgrund der von der Rühreinheit und/oder der Belüftungseinrichtung induzierten Strömung steigen die gebildeten Agglomerate mittig in dem Innenhohlraum des Innenrohrs nach oben. Durch diese lokale Ansammlung der gebildeten Agglomerate können diese, beispielsweise über den seitlich angeordneten Ablaufanschluss, aus der Abtrenneinrichtung und somit dem Aufbereitungsbehälter abgezogen werden. Die Abtrenneinrichtung kann einen kleineren oder gleich großen Durchmesser wie der Aufbereitungsbehälter aufweisen. Beispielsweise kann die Abtrenneinrichtung mittels eines umlaufenden Flansches an der oben offenen Oberseite des Aufbereitungsbehälter befestigt sein. Beispielsweise können die Abtrenneinrichtung eine Nennweite (DN) von 200 mm und der Aufbereitungsbehälter eine Nennweite (DN) von 1.000 mm aufweisen. Bevorzugt weisen ein Innendurchmesser der Abtrenneinrichtung und ein Innendurchmesser des Aufbereitungsbehälters ein Verhältnis von 1 : 5 auf.

In einem zusätzlichen Aspekt der Erfindung wird die Aufgabe gelöst durch ein Wasseraufbereitungsverfahren zum Binden von Mikroplastikpartikeln und/oder Schadstoffen mittels eines zuvor beschriebenen Agglomerationsmittels, mit folgenden Schritten:
- Aufbringen des Agglomerationsmittel auf eine Wasseroberfläche des Wassers,
- Bestrahlen des aufgebrachten Agglomerationsmittels mittels einer UV-Strahlungsquelle, sodass durch eine Photoaktivierung eines Photoinitiators des Agglomerationsmittels eine Polymerisation von Monomeren des Agglomerationsmittel und eine Bildung von Agglomeraten erfolgt, und
- Binden von Mikroplastikpartikeln und/oder Schadstoffen in und/oder an den gebildeten Agglomeraten und optional
- Abtrennen der gebildeten Agglomerate mit den gebundenen Mikroplastikpartikeln und/oder Schadstoffen vom Wasser.

Im Weiteren wird die Erfindung anhand von Ausführungsbeispielen näher erläutert. Es zeigen
- Figur 1: eine stark schematische Schnittdarstellung einer Wasseraufbereitungsanlage mit einem Agglomerationsbehälter,
- Figur 2: eine schematische, dreidimensionale Darstellung einer Abtrenneinrichtung des Agglomerationsbehälters,
- Figur 3: ein Fließbild eines Verfahrens zur Herstellung eines Agglomerationsmittels, und
- Figur 4: ein Fließbild eines Wasseraufbereitungsverfahrens.

Ein Agglomerationsmittel 201 zum Binden von Mikroplastikpartikeln und weiteren Schadstoffen weist als Lösungsmittel 52,61 Gewichtsprozent Aceton 203, als Photoinitiator 2,00 Gewichtsprozent Benzoin 205, als Konservierungsmittel 0,33 Gewichtsprozent Ascorbinsäure 207, als Filmbildner 0,67 Gewichtsprozent Ethylcellulose 209 und als Monomere 44,40 Gewichtsprozent epoxidiertes, acryliertes Sojabohnenöl auf.

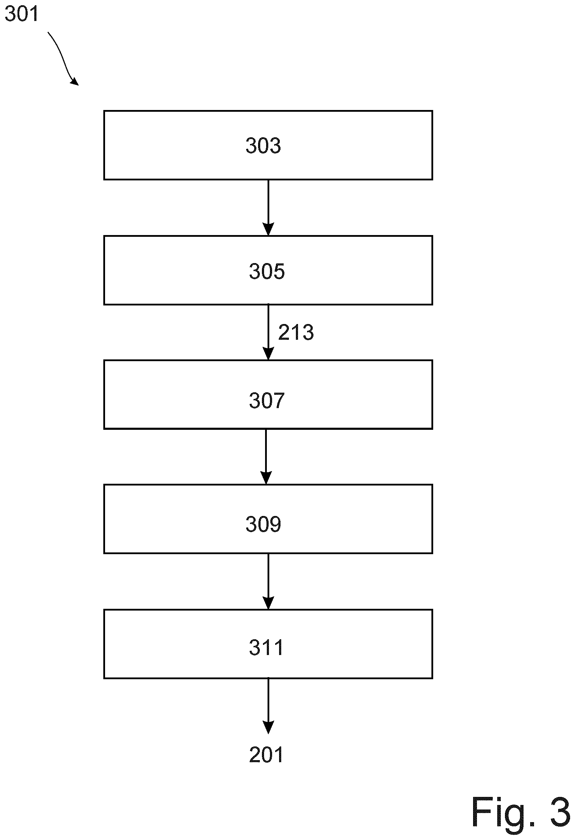

Zum Herstellen des Agglomerationsmittels 201 wird ein Verfahren 301 mit folgenden Schritten durchgeführt (Figur 3). In einem Ansatzbehälter wird das Aceton 203 als Lösungsmittel vorgelegt (Schritt 303). Anschließend werden Benzoin 205 als Photoinitiator und Ascorbinsäure 207 als Konservierungsmittel in das Aceton 203 gegeben und unter Rühren gelöst (Schritt 305), sodass ein Lösungsmittelgemisch 213 vorliegt. In das Lösungsmittelgemisch 213 wird Ethylcellulose 209 als Filmbildner zugegeben (Schritt 307) und nach Einhalten 309 einer Wartezeit erfolgt ein Zugeben 311 von epoxidiertem, acryliertem Sojabohnenöl 211, sodass das einsatzfähige Agglomerationsmittel 201 vorliegt.

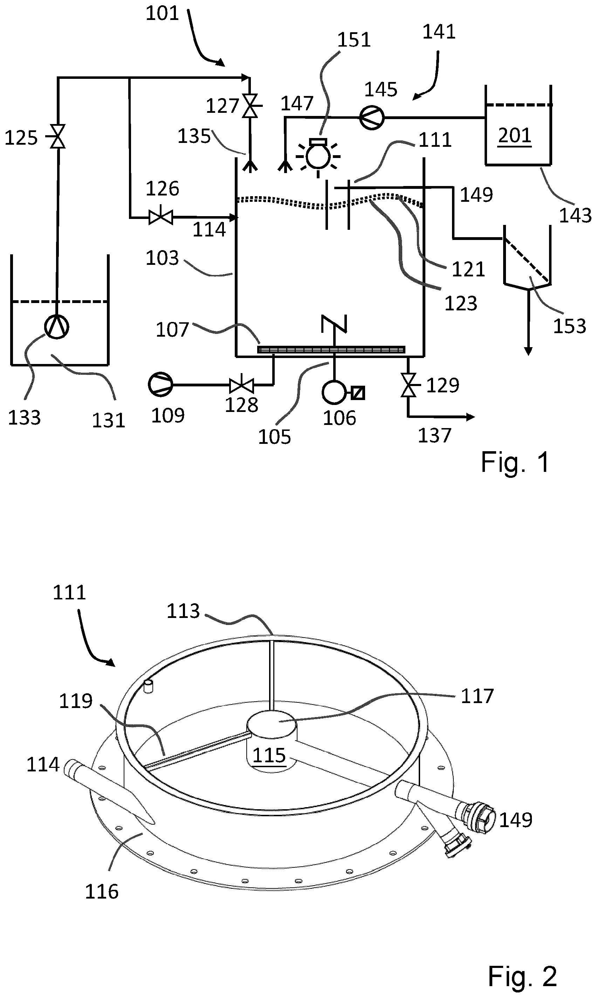

Das Agglomerationsmittel 201 wird in einer Wasseraufbereitungsanlage 101 zur Nachbehandlung von mechanisch und biologisch vorgereinigtem Abwasser verwendet. Die Wasseraufbereitungsanlage 101 weist einen Agglomerationsbehälter 103 auf. Der Agglomerationsbehälter 103 weist an seinem Boden eine Rühreinheit 105 angetrieben von einem Motor 106 auf. Ebenso ist innenliegend im Agglomerationsbehälter 103 an seinem Boden eine Belüftungseinheit 107 verbunden mit einem Gebläse 109 absperrbar über ein Ventil 128 angeordnet. Im Bereich einer Wasseroberfläche 123 weist der Agglomerationsbehälter 103 eine Abtrenneinrichtung 111 auf (Figur 1). Des Weiteren ist am Boden ein über ein Ventil 129 absperrbarer Ablauf 137 des aufbereiteten Wassers angeordnet.

Die Abtrenneinrichtung 111 weist ein äußeres Wandrohr 113 auf (Figur 2). Im innenliegenden Hohlraum des Wandrohrs 113 ist mittels Haltern 119 ein Innenrohr 115 befestigt. Ein Hohlraum 117 des Innenrohrs 115 ist mit einem Agglomeratablauf 149 zum Abführen von gebildeten Agglomeraten verbunden, welcher durch das Wandrohr 113 geführt ist. Ebenso ist ein Einlaufrohr 114 tangential an und durch das Wandrohr 113 angeordnet. Unterhalb des Wandrohrs 113 ist ein Flansch 116 angeordnet, mittels welchem die Abtrenneinrichtung 111 oben am Agglomerationsbehälter 103 befestigt ist. Der Agglomeratablauf 149 der Abtrenneinrichtung 111 führt vom Agglomerationsbehälter 103 zu einem mechanischen Abscheider 153 zum Abtrennen von gebildeten Agglomeraten von dem Restwasser.

Über das Einlaufrohr 114 ist vorgereinigtes Abwasser von einem Ablaufschacht 131 aus einem Nachklärbecken mittels einer Förderpumpe 133 abschaltbar über ein Ventil 125 und 126 in den Agglomerationsbehälter 103 förderbar. Alternativ oder ergänzend kann das vorgereinigte Abwasser absperrbar mittels eines Ventils 127 oberhalb der Abtrenneinrichtung 111 durch den Hohlraum des Wandrohrs 113 von oben direkt über einen Zulauf 135 auf die Wasseroberfläche 123 gegeben werden.

Oberhalb des Hohlraums der Abtrenneinrichtung 111 ist ein UVC-Strahler 151 und eine Dosiereinrichtung 141 mit einem Agglomeratzulauf 147 angeordnet. Über den Agglomeratzulauf 147 ist mittels einer Dosierpumpe 145 der Dosiereinrichtung 141 das Agglomerationsmittel 201 aus einem Vorlagetank 143 förderbar und auf die Wasseroberfläche 123 aufbringbar.

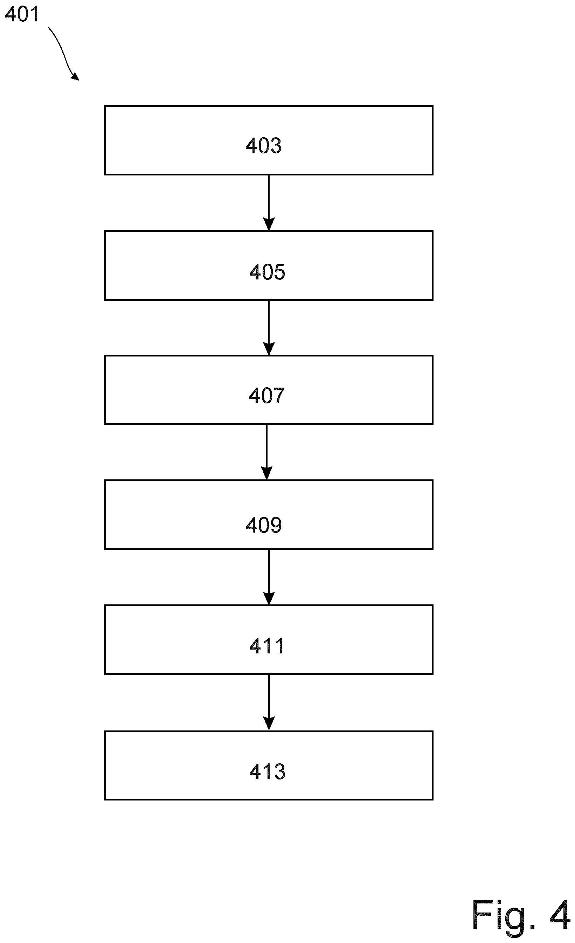

Mit der Wasseraufbereitungsanlage 101 und dem Agglomerationsbehälter 103 werden in einem Wasseraufbereitungsverfahren 401 folgende Schritte durchgeführt (Figur 4). In dem mit vorgereinigtem Wasser aus dem Ablaufschacht 131 aufgefüllten Agglomerationsbehälter 103 wird mittels der Dosiereinrichtung 141 das Agglomerationsmittel 201 aus dem Vorlagetank 143 über den Agglomeratzulauf 147 auf die Wasseroberfläche 123 tropfenweise aufgebracht (Schritt 403). Anschließend erfolgt ein Bestrahlen 405 des aufgebrachten Agglomerationsmittels 201, welches eine Agglomeratschicht 121 auf der Wasseroberfläche 123 ausbildet, mittels des UVC-Strahlers 151. Durch die UVC-Bestrahlung erfolgt ein Photoaktivieren 407 des Photoinitiators Benzoin 205 des Agglomerationsmittels 201 und ein Polymerisieren des epoxidierten, acrylierten Sojabohnenöl zu einem Biopolymer und Bilden von Agglomeraten (Schritt 409).

Aufgrund ihrer Dichte und aufgrund der aus der Belüftungseinheit 107 aufsteigenden Luftblasen werden Mikroplastikpartikel und gegebenenfalls weitere Schadstoffe gezielt an die Wasseroberfläche 123 gebracht und reichern sich in der Agglomeratschicht 121 an. Initiiert durch die Photoaktivierung mittels des Photoinitiators Benzoin 205 polymerisiert das epoxidierte, acrylierte Sojabohnenöl 211 und schließt dabei die Mikroplastikpartikel und weitere Schadstoffe unter Bildung von Agglomeraten ein (Schritt 409), sodass ein Binden von Mikroplastikpartikeln und/oder anderen Schadstoffen in und/oder an den gebildeten Agglomeraten erfolgt (Schritt 411). Die gebildeten Agglomerate steigen im Hohlraum 117 des Innenrohres 115 auf und werden über den Agglomeratablauf 149 aus der Abtrenneinrichtung 111 und somit aus dem Agglomerationsbehälter 103 abgezogen und somit vom Wasser innerhalb des Agglomerationsbehälters 103 abgetrennt (Schritt 413). Anschließend gelangen die gebildeten Agglomerate über den Agglomeratablauf 149 zum mechanischen Abscheider 153, in dem die Mikroplastikpartikel von dem verbliebenen Restwasser getrennt werden. Damit liegen selektiv abgetrennte Agglomerate mit gebundenen Mikroplastikpartikeln und/oder weiteren Schadstoffen konzentriert in einem geringen Abfallstoffvolumen vor.

Somit wird ein Agglomerationsmittel 201, eine Wasseraufbereitungsanlage 101 und ein Wasseraufbereitungsverfahren 401 bereitgestellt, mit welchen effizient und selektiv Mikroplastikpartikel aus Wasser entfernbar und mittels des Agglomerationsmittels 201 anreicherbar und bindbar sind.

### Bezugszeichenliste

101 Wasseraufbereitungsanlage
103 Agglomerationsbehälter
105 Rühreinheit
106 Motor
107 Belüftungseinheit
109 Gebläse
111 Abtrenneinrichtung
113 Wandrohr
114 Einlaufrohr
115 Innenrohr
116 Flansch
117 Hohlraum
119 Halter
121 Agglomeratschicht
123 Wasseroberfläche
125 Ventil
126 Ventil
127 Ventil
128 Ventil
129 Ventil
131 Ablaufschacht aus Nachklärbecken
133 Förderpumpe
135 Zulauf
137 Ablauf des aufzubereitenden Wassers
141 Dosiereinrichtung
143 Vorlagetank des Agglomerationsmittel
145 Dosierpumpe
147 Agglomeratzulauf
149 Agglomeratablauf
151 UVC-Strahler
153 Mechanischer Abscheider
201 Agglomerationsmittel
203 Aceton (Lösungsmittel)
205 Benzoin (Photoinitiator)
207 Ascorbinssäure (Konservierungsmittel)
209 Ethylcellulose (Filmbildner)
211 epoxidiertes, acryliertes Sojabohnenöl (Monomere)
213 Lösungsmittelgemisch
301 Verfahren zur Herstellung eines Agglomerationsmittels
303 Vorlegen von Aceton
305 Lösen eines Photoinitiators und eines Konservierungsmittels in Aceton
307 Zugeben von Ethylcellulose
309 Einhalten einer Wartezeit
311 Zugeben von epoxidierten, acrylierten Sojabohnenöl
401 Wasseraufbereitungsverfahren
403 Aufbringen eines Agglomerationsmittel auf eine Wasseroberfläche
405 Bestrahlen des aufgebrachten Agglomerationsmittels mittels einer UVC-Strahlungsquelle
407 Photoaktivieren eines Photoinitiators des Agglomerationsmittel
409 Polymerisieren von Monomeren des Agglomerationsmittel und Bilden von Agglomeraten
411 Binden von Mikroplastikpartikeln und/oder Schadstoffen in und/oder an den gebildeten Agglomeraten
413 Abtrennen der gebildeten Agglomeraten mit den gebundenen Mikroplastikpartikeln und/oder Schadstoffen vom Wasser

## Patentansprüche

1. Agglomerationsmittel (201) zum Binden von Mikroplastikpartikeln und/oder Schadstoffen im Wasser, wobei das Agglomerationsmittel (201) einen weitgehend wasserunlöslichen Filmbildner (209) zum Bilden eines Films auf einer Wasseroberfläche des Wassers und ein Konservierungsmittel (207) zum Haltbarmachen des Agglomerationsmittel (201) aufweist, **dadurch gekennzeichnet, dass** das Agglomerationsmittel (201) Monomere (211), einen Photoinitiator (205) und ein organisches Lösungsmittel (203) zum Lösen des Photoinitiator (205) aufweist, wobei die Monomere (211) ein acryliertes und/oder epoxidiertes pflanzliches Öl aufweisen, sodass durch eine Photoaktivierung des Photoinitiators (205) eine Polymerisation der Monomere (211) und eine Bildung von Agglomeraten zum Binden von Mikroplastikpartikeln und/oder Schadstoffen im Wasser erzeugbar sind.

2. Agglomerationsmittel (201) nach Anspruch 1, **dadurch gekennzeichnet, dass** das Agglomerationsmittel (201) die Monomere (211) in einem Bereich von 35,00 bis 60,00 Gewichtsprozent, das organische Lösungsmittel (203) in einem Bereich von 15,00 bis 69,00 Gewichtsprozent, den Photoinitiator (205) in einem Bereich von 0,50 bis 5,00 Gewichtsprozent, den Filmbildner (209) in einem Bereich von 0,50 bis 2,00 Gewichtsprozent und/oder das Konservierungsmittel (207) in einem Bereich von 0,10 bis 1,00 Gewichtsprozent aufweist, wobei die Monomere (211), das organische Lösungsmittel (203), der Photoinitiator (205), der Filmbildner (209) und das Konservierungsmittel (207) sich jeweils zu 100 Gewichtsprozent ergänzen.

3. Agglomerationsmittel (201) nach Anspruch 1 oder 2, **dadurch gekennzeichnet, dass** das acrylierte und/oder epoxidierte pflanzliche Öl Sojabohnenöl (211) und/oder Leinöl ist.

4. Agglomerationsmittel (201) nach einem der vorherigen Ansprüche, **dadurch gekennzeichnet, dass** der Photoinitiator (205) eine Keton-Verbindung, insbesondere Benzoin, Benzophenon und/oder 2-Thioxanthon-Thioessigsäure, aufweist.

5. Agglomerationsmittel (201) nach einem der vorherigen Ansprüche, **dadurch gekennzeichnet, dass** das organische Lösungsmittel (203) Aceton, Ethylacetat, Diethylether und/oder einen einwertigen, primären oder sekundären Alkohol aufweist.

6. Agglomerationsmittel (201) nach einem der vorherigen Ansprüche, **dadurch gekennzeichnet, dass** der Filmbildner (209) ein Cellulosederviat, insbesondere Ethylcellulose und/oder Nitrocellulose, aufweist.

7. Verfahren (301) zur Herstellung eines Agglomerationsmittels (201) zum Binden von Mikroplastikpartikeln und/oder Schadstoffen im Wasser, mit folgenden Schritten:
- Vorlegen (303) eines organischen Lösungsmittels (203),
- Lösen (305) eines Photoinitiators (205) und eines Konservierungsmittels (207) in dem Lösungsmittel (203), sodass ein Lösungsmittelgemisch (213) vorliegt,
- Zugeben (307) eines Filmbildners (209) zu dem Lösungsmittelgemisch (213),
- Warten (309) bis der Filmbildner (209) in dem Lösungsmittelgemisch (213) gelöst ist, und anschließend
- Zugeben (311) von Monomeren (211), wobei die Monomere (211) ein acryliertes und/oder epoxidiertes pflanzliches Öl aufweisen,
sodass ein einsatzfähiges Agglomerationsmittel (201) nach einem der Ansprüche 1 bis 6 vorliegt.

8. Wasseraufbereitungsvorrichtung (101) zum Entfernen von Mikroplastikpartikeln und/oder Schadstoffen im Wasser, wobei die Wasseraufbereitungsvorrichtung (101) einen Aufbereitungsbehälter (103) aufweisend das aufzubereitende Wasser mit einer Wasseroberfläche (123), eine Dosiereinrichtung (141) zum Dosieren eines Agglomerationsmittel (201) nach einem der Ansprüche 1 bis 6 auf die Wasseroberfläche (123) und optional eine Rühreinrichtung (105) zum Rühren des Wassers aufweist, **dadurch gekennzeichnet, dass** die Wasseraufbereitungsvorrichtung (101) eine UV-Strahlungsquelle (151) derart aufweist, dass durch eine Photoaktivierung des Photoinitiators (205) eine Polymerisation der Monomere (211) des Agglomerationsmittels (201) und eine Bildung von Agglomeraten erzeugbar sind, sodass Mikroplastikpartikel und/oder Schadstoffe in und/oder an den gebildeten Agglomeraten bindbar sind.

9. Wasseraufbereitungsvorrichtung (101) nach Anspruch 8, **dadurch gekennzeichnet, dass** die Wasseraufbereitungsvorrichtung (101) eine Abtrenneinrichtung (111) zum Entfernen von gebildeten Agglomeraten des Agglomerationsmittels (201) mit den gebundenen Mikroplastikpartikeln und/oder Schadstoffen vom Wasser aufweist.

10. Wasseraufbereitungsvorrichtung (101) nach Anspruch 9, **dadurch gekennzeichnet, dass** die Abtrenneinrichtung (111) eine äußere Gehäusewand (113) aufweist, an welcher ein Innenrohr (115) mit einem Innenhohlraum (117) angeordnet ist und der Innenhohlraum (117) mit einem Ablaufanschluss (149) verbunden ist, sodass in dem Innenhohlraum (117) sich ansammelnde Agglomerate über den Ablaufanschluss (149) entfernbar sind.

11. Wasseraufbereitungsverfahren (401) zum Binden von Mikroplastikpartikeln und/oder Schadstoffen im Wasser mittels eines Agglomerationsmittels (201) nach einem der Ansprüche 1 bis 6, mit folgenden Schritten:
- Aufbringen (403) des Agglomerationsmittel (201) auf eine Wasseroberfläche (123) des Wassers,
- Bestrahlen (405) des aufgebrachten Agglomerationsmittels (201) mittels einer UV-Strahlungsquelle (151), sodass durch eine Photoaktivierung (407) eines Photoinitiators (205) des Agglomerationsmittels (201) eine Polymerisation (409) von Monomeren (211) des Agglomerationsmittel (201) und eine Bildung von Agglomeraten erfolgt, und
- Binden (411) von Mikroplastikpartikeln und/oder Schadstoffen in und/oder an den gebildeten Agglomeraten und optional
- Abtrennen (413) der gebildeten Agglomerate mit den gebundenen Mikroplastikpartikeln und/oder Schadstoffen vom Wasser.
